# EUROPEAN PATENT APPLICATION

(11) **EP 2 835 577 A1**
(43) Date of publication of application: **11.02.2015**
(21) Application number: 14177144.4
(22) Date of filing: 15.07.2014
(51) Int. Cl.: F21V 5/04, F21V 7/04, F21V 14/02, F21Y 101/02, F21W 131/406

(54) **Lighting apparatus with zooming function**

(30) Priority: 08.08.2013 CN 201310344175
(71) Applicant: OSRAM GmbH, 80807 München (DE)
(72) Inventor: Deng, Hong, 215300 Kunshan (CN); Rehn, Henning, 13407 Berlin (DE)

(57) **Abstract**

The present disclosure relates to a lighting apparatus (20) with a zooming function comprising a reflector (23) which has a truncated cone shape along a central axis (A2) of the lighting apparatus (20), a base (24) which is coupled to a narrow end face of the reflector (23) and is capable of moving toward a wide end face of the reflector (23) along the central axis (A2) of the lighting apparatus (20), and a light source (21) which is mounted at an end face of the base (24) centrally. The lighting apparatus (20) has advantages of high efficiency, low heat generation, etc.

## Description

### Field of the Invention

The present disclosure generally relates to the technical field of lighting, and in particular to a lighting apparatus with a zooming function, and more specifically to a lighting apparatus with a zooming function which is capable of improving lighting efficiency.

### Background of the Invention

A lighting apparatus with a zooming function such as so called "pepper light" has been broadly used in stage illumination or studio illumination. The zooming function refers to a function of adjusting the beam angle and therefore the illumination area. Many solutions for implementing the lighting apparatus with the zooming function are known. However, such solutions have disadvantages of low efficiency, high heat generation, non-uniform zooming, etc.

### Summary of the Invention

A brief summary of the present disclosure is given below, to provide a basic understanding of some aspects of the disclosure. It should be understood that the summary is not exhaustive; it does not intend to define a key or important part of the disclosure, nor does it intend to limit the scope of the disclosure. The object of the summary is only to briefly present some concepts, which serves as a preamble of the detailed description that follows.

In view of the above drawbacks in the prior art, an object of the present disclosure is to provide a lighting apparatus with a zooming function which can remove at least one of the disadvantages as described above.

According to the present disclosure, it is provided a lighting apparatus with a zooming function comprising a reflector which has a truncated cone shape along a central axis of the lighting apparatus, a base which is coupled to a narrow end face of the reflector and is capable of moving toward a wide end face of the reflector along the central axis of the lighting apparatus, and a light source which is mounted at an end face of the base centrally.

The lighting apparatus according to the present disclosure has an uniform zooming function and has at least advantages of high lighting efficiency and low heat generation.

### Brief Description of the Drawings

The description below with reference to the accompanying drawings can provide a better understanding of the present disclosure. In the drawings, the same or similar reference signs denote the same or similar components. The drawings and the detailed description below are included in the specification and constitute a part of the specification, and further illustrate the preferred embodiments of the disclosure and explain the principles and advantages of the disclosure. In the drawings:
Figure 1a is a schematic diagram of a lighting apparatus with a zooming function according to the prior art, which is lighting at a large beam angle;
Figure 1b is a schematic diagram of the lighting apparatus with the zooming function according to the prior art, which is lighting at a small beam angle;
Figure 2a is a schematic diagram of a lighting apparatus according to a first embodiment of the present disclosure, which is lighting at a large beam angle;
Figure 2b is a schematic diagram of the lighting apparatus according to the first embodiment of the present disclosure, which is lighting at a small beam angle;
Figure 3 is a schematic diagram of a lighting apparatus according to a second embodiment of the present disclosure, which is lighting at a small beam angle;
Figures 4a and 4b are a perspective diagram of the reflector of the lighting apparatus according to the first embodiment of the present disclosure and a sectional diagram thereof along a central axis of the lighting apparatus, respectively;
Figures 5a and 5b are a perspective diagram of the reflector of the lighting apparatus according to the second embodiment of the present disclosure and a sectional diagram thereof along a central axis of the lighting apparatus, respectively;
Figures 6a and 6b are a schematic diagram of a relative position of a light source to a reflector of the lighting apparatus according to the first embodiment of the present disclosure and a schematic diagram of the obtained illumination area, respectively;
Figures 7a and 7b are a schematic diagram of a relative position of a light source to a reflector of the lighting apparatus according to the first embodiment of the present disclosure and a schematic diagram of the obtained illumination area, respectively;
Figures 8a and 8b are a schematic diagram of a relative position of a light source to a reflector of the lighting apparatus according to the first embodiment of the present disclosure and a schematic diagram of the obtained illumination area, respectively; and
Figures 9a and 9b are a schematic diagram of a relative position of a light source to a reflector of the lighting apparatus according to the first embodiment of the present disclosure and a schematic diagram of the obtained illumination area, respectively.

### Detailed Description of the Embodiments

The exemplary embodiments of the present disclosure will be described hereinafter in combination with the accompanying drawings. In view of clarity and conciseness, not all of the features of a practical embodiment are described in the description. However, it should be understood that many embodiment-specific decisions are to be made in the development of any practical embodiment, in order to achieve particular objects of the developers; and those decisions may be changed with the variation of the embodiments.

It should be further pointed out that, only those structures closely related to the present disclosure are shown in the drawings, and those having little relations to the disclosure are omitted, so as not to obscure the disclosure with unnecessary details.

A lighting apparatus with a zooming function according to the present disclosure will be described in detail with the help of the accompanying drawings. It will be appreciated that the disclosure is not limited to the specific implementation described below with reference to the drawings.

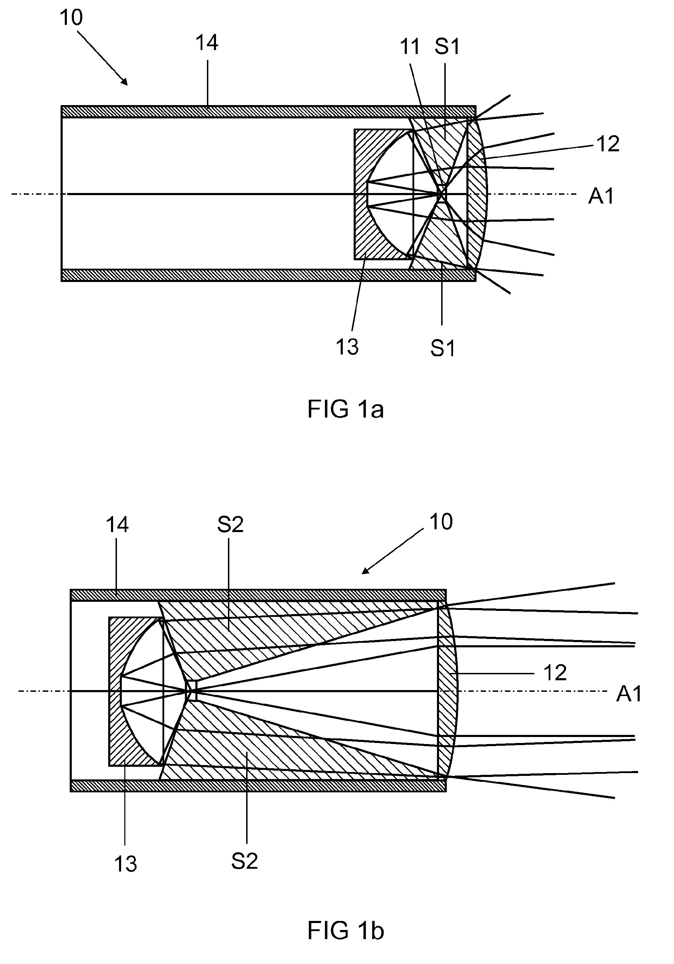

Figures 1a and 1b are schematic diagrams of a lighting apparatus 10 with a zooming function according to the prior art, which is lighting at a large beam angle and at a small beam angle, respectively.

The lighting apparatus 10 with the zooming function as shown in Figures 1a and 1b is a lighting apparatus known as "pepper light" which has been broadly used in stage illumination and studio illumination. The lighting apparatus 10 typically includes a light source 11, a front lens 12, a reflector 13, and a housing 14.

As shown in Figures 1a and 1b, the housing 14 of the lighting apparatus 10 has a cylinder shape. The light source 10 and the reflector 13 are housed in the housing 14 and are arranged along a central axis A1 of the housing 14. The light source 10 and the reflector 13 may move along the central axis A1 of the housing 14 in the housing 14. The front lens 12 is mounted on an end of housing 14.

The light source 11 is typically a halogen bulb. The front lens 12 may be a plate lens or a convex lens according to specific requirement. In Figures 1a and 1b the front lens 12 is a convex lens. The reflector 13 is used for reflecting the light emitted by the light source 11 toward the front lens 12.

Herein the zooming function of the lighting apparatus 10 is achieved by changing the distance between the light source 11 and the front lens 12.

As shown in Figure 1a, when the light source 11 is close to the front lens 12, the light emitted by the lighting apparatus 10 has a beam angle up to +/-40°. The term "beam angle" used herein indicates an angle formed by two directions with a light intensity of 50% of the maximum light intensity in a section along a central axis of beam emitted by a lighting apparatus. Generally, the direction along the central axis has the maximum light intensity, and the beam angle may be an angle of outer edge of a light cone formed by the light with a light intensity of 50% of the maximum light intensity relative to the central axis. Most potion of the light emitted by the light source 11 may be emitted outside through the front lens 12. As shown in Figure 1a, the light passing through the front lens 12 consists of two portions, one portion is light emitted directly by the light source 11, and the other portion is light emitted by the light source 11 after being reflected by the reflector 13. As indicated by the reference symbol "S1" in Figure 1a, a small portion of light emitted by the light source 11 is emitted to the housing 14 and is absorbed by the housing 14, and thereby can not be emitted outside through the front lens 12. At this time, a small portion of light emitted by the light source 11 is absorbed by the housing 14, and the lighting apparatus 10 has an efficiency of 80%.

As shown in Figure 1b, when the light source 11 moves away from the front lens 12, the beam angle of the light emitted by the lighting apparatus 10 is reduced gradually, and thereby a zooming function is achieved. When the distance between the light source 11 and the front lens 12 has reached to the maximum distance allowed by the design, the beam angle of the light emitted by the lighting apparatus 10 may reach to +/-20°. However, as indicated by the reference symbol "S2" in Figure 1b, a large portion of light emitted by the light source 11 is emitted to the housing 14 and is absorbed by the housing 14, and thereby can not be emitted outside through the front lens 12. At this time, the lighting efficiency of the lighting apparatus 10 is only 50%. In addition, a large portion of light emitted by the light source 11 is absorbed by the housing 14, resulting in temperature rising of the housing 14, and therefore the use safety of the lighting apparatus 10 may be impaired.

The present disclosure provides a novel lighting apparatus with a zooming function, which can overcome the disadvantages of low lighting efficiency, high heat generation, etc.

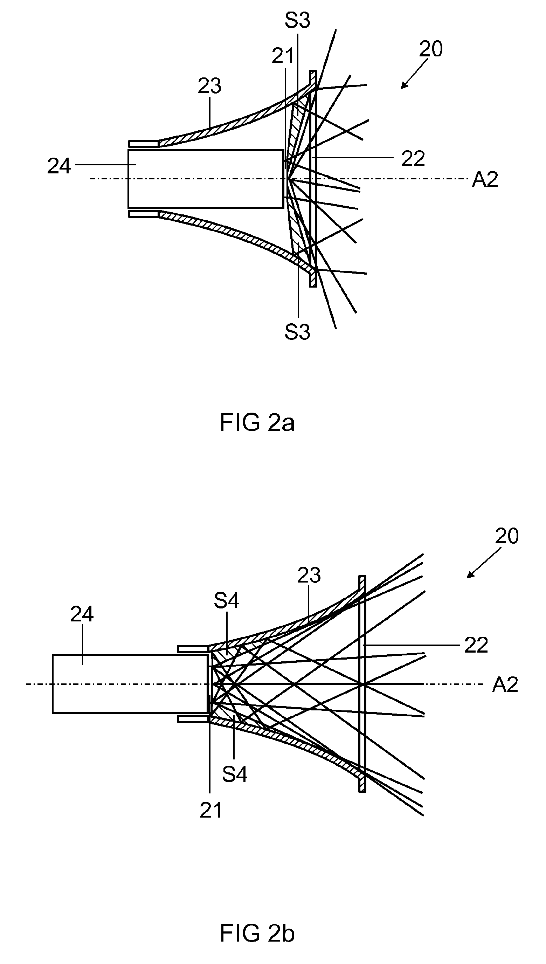

Figures 2a and 2b are schematic diagrams of a lighting apparatus 20 according to a first embodiment of the present disclosure, which is lighting at a large beam angle and at a small beam angle, respectively.

As shown in Figures 2a and 2b, the lighting apparatus 20 according to the first embodiment of the present disclosure includes a light source 21, a front lens 22, a reflector 23, and a base 24.

The light source 21 is a light emitting diode (LED) array which is centrally mounted on an end face of the base 24 as described below. It should be appreciated by those skilled in the art that according to specific application and design requirement, the light source 21 may also be a LED point light source, or may adopt any other lighting component.

The front lens 22 is mounted on a wide end face of the reflector 23 as described below, and the front lens 22 may be a plate lens or a convex lens according to specific requirement. In the embodiment, the front lens 22 is a plate lens made of foggy glass.

In the embodiment, the reflector 23 has a truncated cone shape along a central axis A2 of the lighting apparatus 20. Preferably, the reflector 23 has a faceted truncated cone shape along a central axis A2 of the lighting apparatus 20. Namely, the projection of the reflector 23 on a plane which is perpendicular to the central axis A2 of the lighting apparatus 20 has a regular polygon shape similar to circle. In case that the reflector 23 has a smooth truncated cone shape, there may an imaging effect somewhat in the illumination area of the lighting apparatus 20, that is, a profile or a bright spot of the light source 21 may appear in the illumination area. In case that the reflector 23 has a faceted truncated cone shape, the imaging effect can be reduced largely, and thereby the illumination area is more uniform. Theoretically, the more the number of the faces which constitute the periphery of the faceted truncated cone is, the smaller the area of each face is, and the more uniform the illumination area of the lighting apparatus 20 is. However, the number of the faces depends on specific application and machining precision. In addition, as described above, the projection of the reflector 23 on a plane which is perpendicular to the central axis A2 of the lighting apparatus 20 has a regular polygon shape. Preferably, the regular polygon does not have a structure which is symmetric circumferentially, that is, the number of the sides of the regular polygon is not a multiple of 2 or 3. This may avoid strengthening the light in some directions, and thereby the light distribution is more uniform.

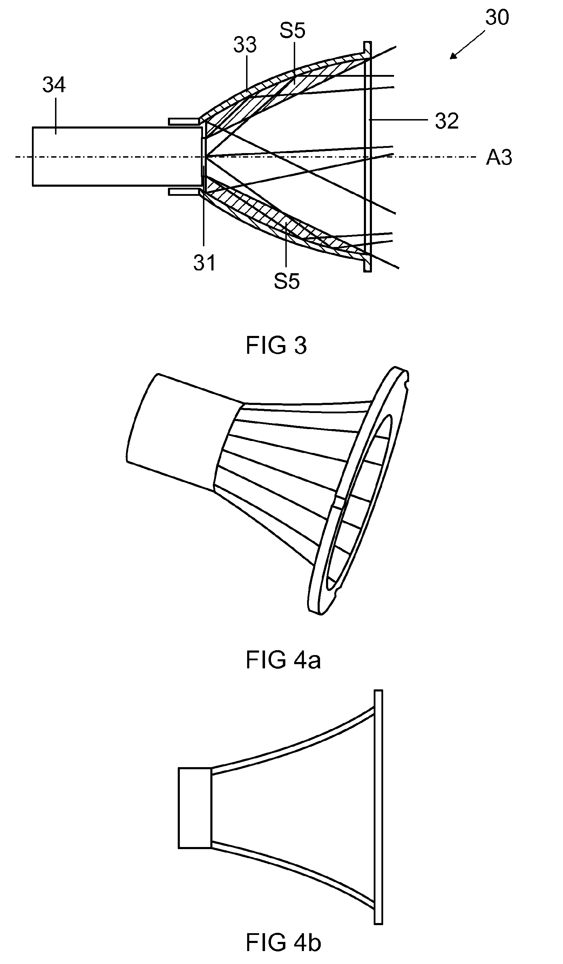

In addition, as shown in Figures 2a and 2b, the reflector 23 may have a trumpet faceted truncated cone shape along the central axis A2 of the lighting apparatus 20. Namely, the projection of the reflector 23 on a plane which is along the central axis A2 of the lighting apparatus 20 has a shape similar to trapezoid, in which two bevel sides of the trapezoid protrude inward. Figures 4a and 4b are a perspective diagram of the reflector 23 of the lighting apparatus 20 according to the first embodiment of the present disclosure and a sectional diagram thereof along the central axis A2 of the lighting apparatus 20, respectively.

The function of the reflector 23 according to the first embodiment of the present disclosure includes the functions of the reflector 13 and the housing 14 as shown in Figures 1a and 1b. The reflector 23 can not only reflect the light emitted by the light source 21, but also function as a housing for receiving and protecting.

The base 24 is provided along the central axis A2 of the lighting apparatus 20 and is coupled to a narrow end face of the reflector 23, and is capable of moving toward the wide end face of the reflector 23 along the central axis A2 of the lighting apparatus 29.

In the embodiment, the base 24 has a cylinder shape along the central axis A2 of the lighting apparatus 20. However, it should be appreciated by those skilled in the art that according to specific application and design requirement, the base 24 may have any other shape, as long as it is capable of moving along the central axis A2 of the lighting apparatus 29.

As shown in Figure 2a, when the light source 21 is close to the front lens 22, the light emitted by the lighting apparatus 20 has a beam angle up to +/-60°. Most potion of the light emitted by the light source 21 may be emitted outside through the front lens 22. As indicated by the reference symbol "S3" in Figure 2a, a tiny portion of light emitted by the light source 21 is absorbed by the reflector 23, and thereby can not be emitted outside through the front lens 22. Therefore, at this time, the lighting efficiency of the lighting apparatus 20 is up to 90%.

As shown in Figure 2b, when the light source 21 moves away from the front lens 22, the beam angle of the light emitted by the lighting apparatus 20 is reduced gradually, and thereby a zooming function is achieved. When the distance between the light source 21 and the front lens 22 has reached to the maximum distance allowed by the design, the beam angle of the light emitted by the lighting apparatus 20 may reach to +/-20°. At this time, as indicated by the reference symbol "S4" in Figure 2b, a small portion of light emitted by the light source 21 is absorbed by the reflector 23, and thereby can not be emitted outside through the front lens 22. At this time, benefiting the novel shape of the reflector 23, the lighting efficiency of the lighting apparatus 20 can still reach to 80%, which is far higher than 50% of the prior art. In addition, a small portion of light emitted by the light source 21 is absorbed by the reflector 23, therefore the temperature of the reflector 23 will not be too high, and thereby the safety of the lighting apparatus 20 may be improved.

In some cases, there is a need for further reducing the beam angle of the lighting apparatus. At this time, the shape of the reflector may be modified to achieve such object. Figure 3 is a schematic diagram of a lighting apparatus 30 according to a second embodiment of the present disclosure, which is lighting at a small beam angle.

The structure of the lighting apparatus 30 according to the second embodiment of the present disclosure is substantially the same as that of the lighting apparatus 20 according to the first embodiment of the present disclosure except for that the shape of a reflector 33 of the lighting apparatus 30 is different from the reflector 23 of the lighting apparatus 20. Therefore, the detailed description regarding the other components of the lighting apparatus 30 will not be repeated.

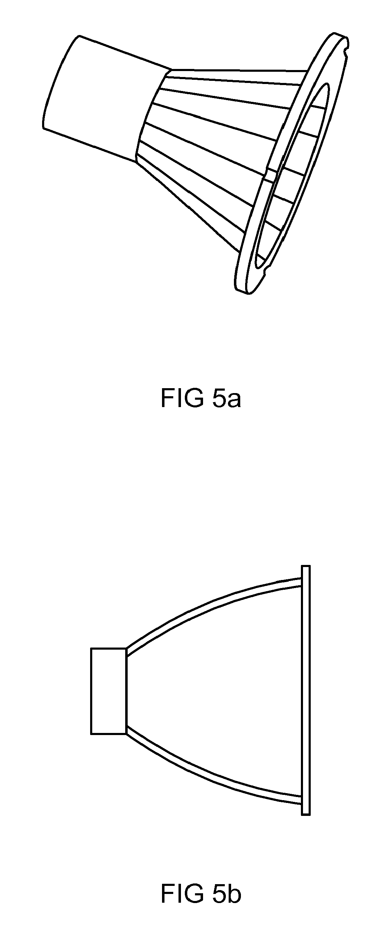

As shown in Figure 3, the reflector 33 may have a bowl faceted truncated cone shape along the central axis A3 of the lighting apparatus 30. Namely, the projection of the reflector 33 on a plane which is along the central axis A3 of the lighting apparatus 30 has a shape similar to trapezoid, in which two bevel sides of the trapezoid protrude outward. Figures 5a and 5b are a perspective diagram of the reflector 33 of the lighting apparatus 30 according to the second embodiment of the present disclosure and a sectional diagram thereof along the central axis A3 of the lighting apparatus 30, respectively.

When the light source 31 is close to the front lens 32, the lighting of the lighting apparatus 30 is similar to that of the lighting apparatus 20 which has been described above with reference to Figure 2a, and therefore the description thereof is omitted herein.

As shown in Figure 3, when the light source 31 moves away from the front lens 32, the beam angle of the light emitted by the lighting apparatus 30 is reduced gradually, and thereby a zooming function is achieved. When the distance between the light source 31 and the front lens 32 has reached to the maximum distance allowed by the design, the beam angle of the light emitted by the lighting apparatus 30 may reach to +/-15°. At this time, as indicated by the reference symbol "S5" in Figure 3, a small portion of light emitted by the light source 31 is absorbed by the reflector 33, and thereby can not be emitted outside through the front lens 32. At this time, benefiting the novel shape of the reflector 33, the lighting efficiency of the lighting apparatus 30 can still reach to 80%.

Comparing with the lighting apparatus of the prior art, the lighting apparatus according to the embodiments of the present disclosure has at least one of the following advantages:
- Benefiting from the shape design of the reflector serving as a housing of the lighting apparatus, the light emitted by the light source are less absorbed, and therefore the lighting efficiency of the lighting apparatus according to the present disclosure is higher than that of the lighting apparatus of the prior art, and the heat generation of the lighting apparatus according to the present disclosure is low.
- Zooming of the lighting apparatus is made to be more uniform by adjusting the shape of the reflector, for example, by modifying the degree how the bevel sides protrude inward or outward.
- An uniform light distribution may be achieved at various zooming positions by using the reflector with the faceted truncated cone shape in combination with the plate lens serving as the front lens which is made of foggy glass.

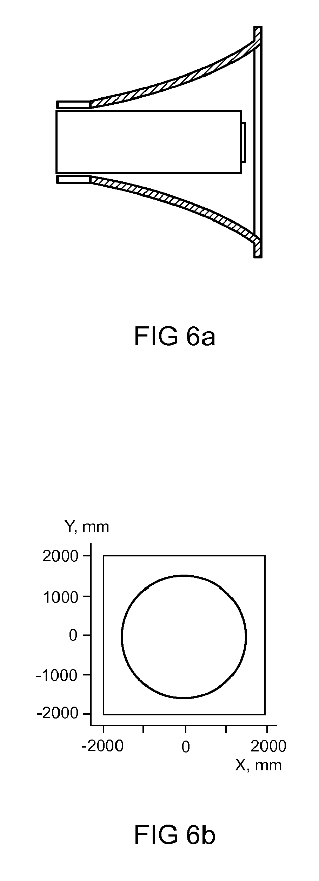

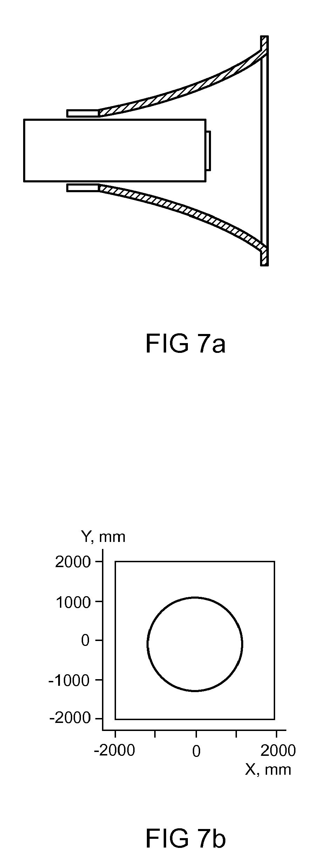

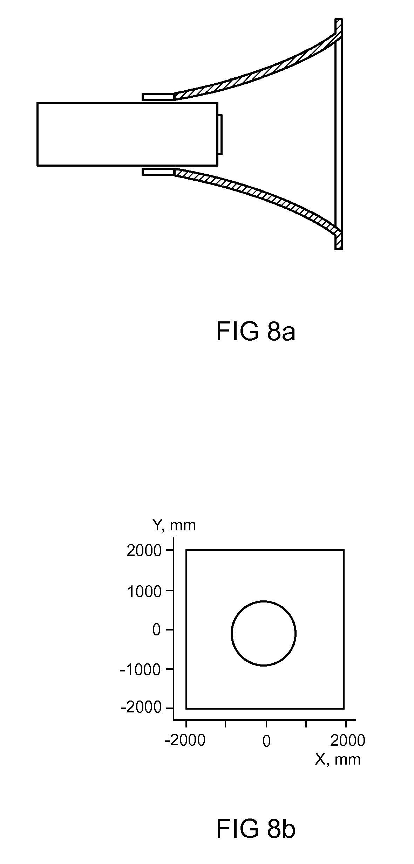

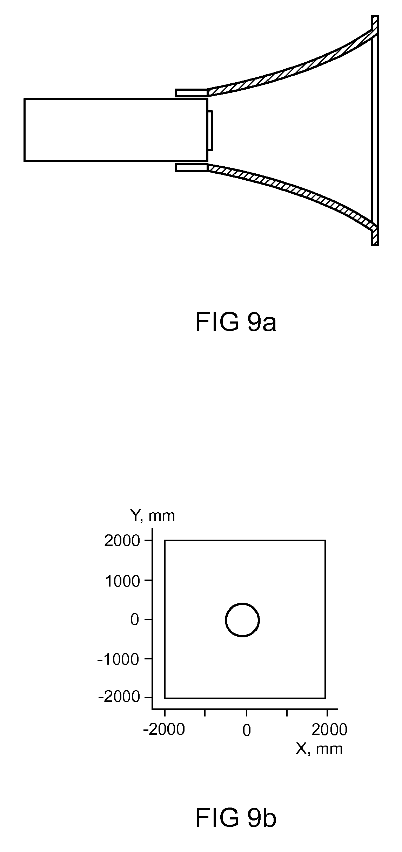

As an example, Figures 6a, 6b, 7a, 7b, 8a, 8b, 9a, 9b illustrate different relative positions of the light source to the reflector of the lighting apparatus according to the first embodiment of the present disclosure and the obtained illumination areas, respectively. The coordinate system shown in Figures 6b, 7b, 8b, 9b is used for indicating the position coordinate of the illumination area of the lighting apparatus. When the light source is close to the wide end face of the reflector as shown in Figure 6a, the illumination area of the lighting apparatus is large, as shown in Figure 6b, and therefore a floodlighting is achieved. When the light source is located at an intermediate position of the reflector close to the wide end face of the reflector as shown in Figure 7a, the illumination area of the lighting apparatus becomes smaller smoothly as shown in Figure 7b. When the light source is located at an intermediate position of the reflector close to the narrow end face of the reflector as shown in Figure 8a, the illumination area of the lighting apparatus continues to become smaller as shown in Figure 8b, and the light beam is more concentrated. When the light source is close to the narrow end face of the reflector as shown in Figure 9a, the light emitted by the lighting apparatus is zoomed such that the illumination area of the lighting apparatus is smallest. It can be seen from these figures that the lighting apparatus according to the first embodiment of the present disclosure has a uniform zooming and a uniform light distribution.

Finally, it should be noted that, the terms "include", "comprise" and any other variations mean non-exclusive inclusion, so that the process, method, article or device that includes a series of elements includes not only those elements but also other elements that are not explicitly listed, or further includes inherent elements of the process, method, article or device. Moreover, when there is no further limitation, the element defined by the wording "include(s) a ..." does not exclude the case that the process, method, article or device that includes the element includes other same elements.

The embodiments of the invention are described in detail in combination with drawings. However, it should be understood that the embodiments described above are only used for illustrating the invention, and do not constitute a limitation of the invention. Various modifications and variations may be made to the above embodiments by those skilled in the art, without departing from the essential and scope of the present invention. Therefore, the scope of the present invention is only defined by the appended claims and the equivalent meanings thereof.

## Claims

1. A lighting apparatus with a zooming function, comprising:
a reflector which has a truncated cone shape along a central axis of the lighting apparatus;
a base which is coupled to a narrow end face of the reflector and is capable of moving toward a wide end face of the reflector along the central axis of the lighting apparatus; and
a light source which is mounted centrally on an end face of the base.

2. The lighting apparatus with the zooming function according to claim 1,
wherein the reflector has a faceted truncated cone shape along the central axis of the lighting apparatus.

3. The lighting apparatus with the zooming function according to claim 2,
wherein the projection of the reflector on a plane which is perpendicular to the central axis of the lighting apparatus has a regular polygon shape, and the number of the sides of the regular polygon is not a multiple of 2 or 3.

4. The lighting apparatus with the zooming function according to any one of claims 1-3,
wherein the base has a cylinder shape along the central axis of the lighting apparatus.

5. The lighting apparatus with the zooming function according to any one of claims 1-4, further comprising:
a plate lens which is made of foggy glass and is mounted on the wide end face of the reflector.

6. The lighting apparatus with the zooming function according to any one of claims 1-5,
wherein the reflector has a trumpet faceted truncated cone shape along the central axis of the lighting apparatus so as to achieve a maximum beam angle of +/-60° when the base moves to close to the wide end face of the reflector.

7. The lighting apparatus with the zooming function according to any one of claims 1-5,
wherein the reflector has a bowl faceted truncated cone shape along the central axis of the lighting apparatus so as to achieve a minimum beam angle of +/-15° when the base moves to close to the narrow end face of the reflector.

8. The lighting apparatus with the zooming function according to any one of claims 1-7,
wherein the light source is a LED.

9. The lighting apparatus with the zooming function according to any one of claims 1-7,
wherein the light source is a LED array.
